Europäisches Patentamt

European Patent Office

Office européen des brevets

(19)

(11) Veröffentlichungsnummer : **0 014 370**
**B1**

(12) **EUROPÄISCHE PATENTSCHRIFT**

(45) Veröffentlichungstag der Patentschrift :
16.02.83

(21) Anmeldenummer : **80100292.4**

(22) Anmeldetag : **21.01.80**

(51) Int. Cl.³ : **H 04 B   3/46**

(54) **Verfahren zur adressenfreien Fehlerortung für eine Nachrichtenübertragungsstrecke.**

(30) Priorität : **02.02.79 DE 2904057**

(43) Veröffentlichungstag der Anmeldung :
**20.08.80 Patentblatt 80/17**

(45) Bekanntmachung des Hinweises auf die Patenterteilung : **16.02.83 Patentblatt 83/07**

(84) Benannte Vertragsstaaten :
**AT BE CH DE FR GB IT LU NL SE**

(56) Entgegenhaltungen :
**DE A 2 014 645**
**DE A 2 134 783**
**DE A 2 425 384**
**DE A 2 653 178**
**DE A 2 653 201**
**DE B 2 004 810**

(73) Patentinhaber : **SIEMENS AKTIENGESELLSCHAFT**
**Berlin und München Wittelsbacherplatz 2**
**D-8000 München 2 (DE)**

(72) Erfinder : **Steiner, Erhard, Dr.**
**Flurstrasse 1**
**D-8031 Eichenau (DE)**

EP 0 014 370 B1

# 0 014 370

Verfahren zur adressenfreien Fehlerortung für eine Nachrichtenübertragungsstrecke

Die Erfindung betrifft ein Verfahren zur adressenfreien Fehlerortung mittels Schleifenschluß für eine Nachrichtnübertragungsstrecke von einer ortenden Endstelle aus über wenigstens eine die Übertragungssignale beider Übertragungsrichtungen regenerierende und/oder verstärkende Zwischenstelle, die einen Schleifenschlußschalter zur Verbindung des Ausgangs der Zwischenstelle für die eine Übertragungsrichtung mit deren Eingang für die andere Übertragungsrichtung enthält und von ortenden Endstelle ein Fehlerortungssignal ausgesendet wird, das periodisch abwechselnd Abschnitte vorgewählter Dauer mit einem Prüfsignal und solche mit einem über den gesamten Ortungsvorgang gleichbleibenden Schleifenschlußsignal enthält, daß als Schleifenschlußsignal ein im normalen Betrieb mit ausreichend geringer Wahrscheinlichkeit auftretendes Signal vorgesehen ist, daß nach Ablauf der für die Ortungsmessungen erforderlichen Zeit die Aussendung des Schleifenschlußsignals unterbrochen und dadurch der in der ersten Zwischenstelle geschaltete Schleifenschluß aufgehoben und der Schleifenschlußempfänger in der ersten Zwischenstelle für die weitere Ortungszeit blockiert wird und außerdem die unmittelbar folgende Zwischenstelle in die Schliefenschlußstellung gebracht wird, und daß zum weiteren Fortschalten des Schleifenschlusses die Aussendung des Schleifenschlußsignals erneut unterbrochen wird.

Kabelstrecken zur Übertragung von trägerfrequenten oder digitalen Signalen enthalten in bestimmten Abständen in die Übertragungsstrecke eingesetzte Zwischenstationen, in denen das übertragene Signal regeneriert und/oder verstärkt wird. Auch die in letzter Zeit entstandenen Lichtwellenleiter-Übertragungssysteme benötigen aufgrund der Dämpfungs- und Verzerrungseigenschaften des verwendeten Lichtleiters in bestimmten Abständen regenerierende und verstärkende Zwischenstellen. Diese Zwischenstellen entsprechen dabei den Zwischenstellen für Kupferkabel, es ist lediglich noch ein optischer Signalempfänger vor- und ein optischer Sender nachgeschaltet. Die Zwischenstellen sind dabei in der Regel so eingerichtet, daß Verstärker und Regeneratoren für die eine Gesprächsrichtung mit denen für die andere Gesprächsrichtung zusammen in einer gemeinsamen Muffe untergebracht sind. Die andere Endstelle ist dabei ebenso wie die Zwischenstelle ausgerüstet und kann ebenfalls geortet werden. Diese gemeinsame Unterbringung ermöglicht den Schleifenschluß, bei dem in der Zwischenstelle eine Verbindung von der Regenerator- und Verstärkereinrichtung für die ein Übertragungsrichtung mit der Regenerator- und Verstärkereinrichtung für die andere Übertragungsrichtung geschaltet und über diese Verbindung ein von der ortenden Endstelle ausgesandtes Prüfsignal zu dieser zurückgesendet wird. Der Schleifenschluß kann dabei durch Aussendung einer bestimmten Adresse in einer dieser Adresse erkennenden Zwischenstelle ausgelöst werden.

Aus der DE-OS 26 53 201 ist ein adressenfreies Fehlerortungsverfahren der eingangs erwähnten Art bekannt geworden, bei dem zunächst ein Vorbereitungssignal ausgesendet wird und anschließend ein digitales Signal, das neben einem Prüfsignal perdiodisch den Schleifenschlußbefehl enthält und dieser durch eine bestimmte Bitfolge mit festgelegter Periode dargestellt wird.

Nach Ablauf der für die Ortungsmessungen erforderlichen Zeit wird die Aussendung des Schleifenschlußsignals unterbrochen und dadurch der in der ersten Zwischenstelle geschaltete Schleifenschluß aufgehoben, der Schleifenschlußempfänger für die weitere Ortungszeit blockiert und außerdem die unmittelbar folgende Zwischenstelle in die Schleifenschlußstellung gebracht. Außerdem wird zum weiteren Fortschalten des Schleifenschlusses die Aussendung des Schleifenschlußsignals in der ortenden Endstelle erneut unterbrochen. Bei der genannten deutschen Offenlegungsschrift sind also mindestens zwei unterschiedliche Signale erforderlich, wobei das Vorbereitungssignal beim Weiterschalten des Schleifenschlusses von einer zur nächsten Zwischenstelle jeweils wiederholt wird und dazu neben einem Umschalter ein Vorbereitungssignalsender vorgesehen ist. Durch den Vorbereitungssignalsender ergibt sich neben einem höheren Stromverbrauch in den ferngespeisten Regeneratoren ein zusätzlicher Aufwand, während der Umschalter bei Strecken mit Kupferkabeln im Hinblick auf die hohe Fernspeisespannung und eine impulsgetreue Übertragung schwierig zu realisieren ist und für Lichtwellenleiterstrecken derartige Trennschalter die hohen Anforderungen noch nicht zufriedenstellend erfüllen.

In der DE-OS 26 53 178 ist ein adressenfreies Fehlerortungsverfahren beschrieben, bei dem ein spezieller Schleifenschlußbefehl verwendet wird, der eine aus mehreren unmittelbar aufeinanderfolgenden Nullzeichen bestehende Folge umfaßt. Eine derartige Folge von Nullzeichen ist zwar in der einzelnen Zwischenstelle einfach zu erkennen, neben der nachteiligen Verwendung eines Trennschalters zur Abschaltung der folgenden Zwischenregeneratoren ist die Verwendung dieses adressenfreien Fehlerortungsverfahrens auf PCM-Strecken mit bestimmten Codes beschränkt, bei denen diese Folge von Nullzeichen im normalen Betrieb nicht vorkommt und auch durch häufig vorkommende Fehler nicht ohne weiteres vorgetäuscht werden kann. Eine länger dauernde Nullfolge kann außerdem zu Schwierigkeiten bei der Taktgewinnung in den Zwischenstellen und damit zu Synchronisationsstörungen führen.

Bei derartigen Schleifenschlüssen ist es im Hinblick auf die eindeutige Zuordnung erkannter Fehler wichtig, daß möglichst alle für die Signalübertragung wichtigen Baugruppen in der Zwischenstelle in den Schleifenschlußweg eingeschaltet und überprüft werden. Dies gilt insbesondere für die alterungs- und

2

störanfälligen optischen Sender und Empfänger in Lichtwellenleiter-Übertragungssystemen. Im Hinblick auf die vollständige Prüfung aller Baugruppen sollte der Schleifenschluß also von der Sendeendstufe der einen Übertragungsrichtung zum Empfängereingang der anderen Übertragungsrichtung erfolgen. Bei Kupferkabeln ergibt sich hierbei die Schwierigkeit, daß zwischen Senderendstufe und Übertragungskabel ein Trennschalter vorgesehen sein muß, der einerseits für das Schalten vergleichsweise hoher Leistungen und andererseits für das Schalten von Signalen vergleichsweise hoher Frequenz geeignet sein muß. Bei Lichtwellenleiter-Übertragungssystemen sind derartige optisch wirkende Trennschalter hoher Zuverlässigkeit z. Zt. nicht bekannt, so daß für Lichtwellenleiter-Übertragungssysteme die Lösung entfallen müßte.

Die Aufgabe der Erfindung besteht also darin, ein Verfahren der eingangs genannten Art zu finden, bei dem die Verbindung zwischen Sendeendstufe und Übertragungsstrecke nicht aufgetrennt werden muß.

Erfindungsgemäß wird die Aufgabe dadurch gelöst, daß die Vorbereitungsstellung der einzelnen Zwischenstellen ohne Aussendung eines gesonderten Vorbereitungssignals durch das Schleifenschlußsignal mit gesteuert wird und dazu während des gesamten Fehlerortungsvorganges von der ortenden Endstelle ein einziges Fehlerortungssignal ausgesendet wird, daß eine erste Haltezeit vorgesehen ist und Störungen, deren Dauer diese erste Haltezeit nicht überschreitet, die Erkennung des Schleifenschlußsignals in der Zwischenstelle nicht beeinträchtigen, daß die Dauer der Prüfzeitabschnitte kleiner als die erste Haltezeit gewählt ist, daß nach ungestörtem Empfang des Schleifenschlußsignals über eine vorgegebene Erkennungszeit in der Zwischenstelle diese in eine Vorbereitungsstellung umgeschaltet wird und dazu wenigstens nahezu gleichzeitig die Signalübertragung von der Zwischenstelle in beide Übertragungsrichtungen unterbrochen wird, von der ersten Haltezeit auf eine vergleichsweise längere zweite Haltezeit umgeschaltet wird und die Empfangs- und Steuereinrichtung für das Schleifenschlußsignal in eine Vorbereitungsstellung gebracht wird, daß anschließend in der ortenden Endstelle nach einer die zweite Haltezeit überschreitenden, beliebig verlängerbaren Zeit die Aussendung des Schleifenschlußsignals für eine Schaltimpulsdauer, die länger als die erste Haltezeit und kürzer als die zweite Haltezeit und als die Erkennungszeit ist, unterbrochen wird und dadurch in der vorbereiteten Zwischenstelle der Schleifenschluß geschaltet und die Signalübertragung in beide Übertragungsrichtungen wieder eingeschaltet wird und somit die nachgeschalteten Zwischenstellen zunächst das den Schleifenschlußbefehl enthaltende Fehlerortungssignal wieder empfangen und die unmittelbar folgende Zwischenstelle nach der Erkennungszeit in die Vorbereitungsstellung gebracht wird und daß danach zur Weiterschaltung des Schleifenschlusses in der ortenden Endstelle nach einer die Summe aus Erkennungszeit und zweiter Haltezeit überschreitenden, für die Ortungsmessung beliebig verlängerbaren Zeit, die Aussendung des Schleifenschlußsignals erneut für eine Schaltimpulsdauer unterbrochen wird.

Das erfindungsgemäße Verfahren bietet den erheblichen Vorteil der universellen Einsetzbarkeit, so daß beispielsweise parallel angeordnete Trägerfrequenz-Übertragungssysteme, digitale Systeme und Lichtwellenleiter-Übertragungssysteme gemeinsam durch des gleiche Verfahren überwacht werden können und dadurch auch Streckenersatzschaltungen erleichtert werden.

Ausgestaltungen der Erfindung sind den Unteransprüchen zu entnehmen.

Die Erfindung soll im folgenden an Hand der Zeichnung näher erläutert werden. In der Zeichnung zeigt

Figur 1  die Darstellung des Fehlerortungssignals mit den Prüfsignal- und den Schleifenschlußsignalabschnitten und

Figur 2  den Prinzipstromlauf in einem erfindungsgemäßen Fehlerortungsempfänger.

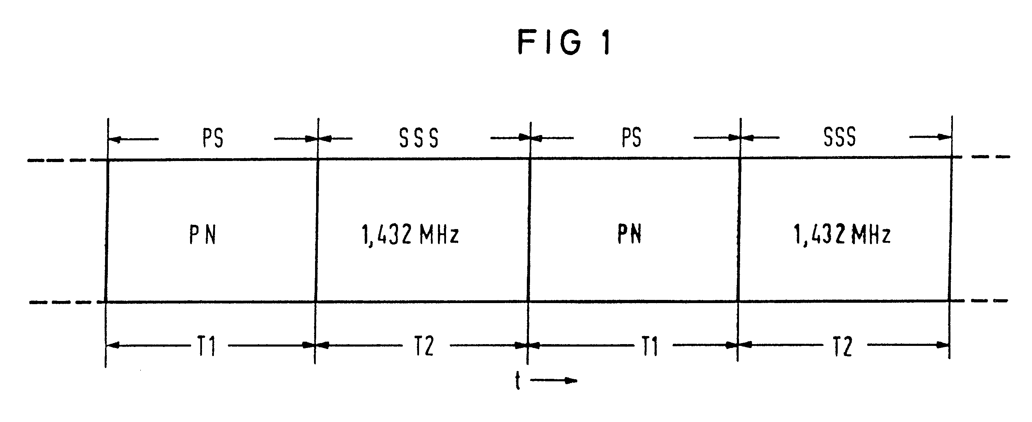

In der Fig. 1 ist ein Ausschnitt aus dem von der ortenden Endstelle ausgesandten und im Ausführungsbeispiel verwendeten Fehlerortungssignal dargestellt. Das Fehlerortungssignal besteht aus aufeinanderfolgenden Prüfsignalabschnitten PS und Schleifenschlußsignalabschnitten SSS, wobei die Dauer dieser Abschnitte T1, T2, jeweils 3, 8 ms beträgt. Die Prüfsignalabschnitte sind jeweils Teile einer Pseudozufallsfolge PN, während die Schleifenschluß-Signalabschnitte SSS Teile einer periodischen Rechtekschwingung mit der Frequenz von 1,432 MHz sind. Zur Erleichterung der Synchronisation im Ortungsgerät sind dabei die Signalwechsel zwischen Prüfsignal und Schleifenschlußsignal streng phasensynchron. Diese Synchronisation im Empfangsteil des Ortungsgerätes ist wichtig im Hinblick auf die Bitfehlerraten- und die Laufzeitmessungen, die an den durchgeschleiften Fehlerortungssignalen erfolgen.

Ein derartiges Fehlerortungssignal wird im Ausführungsbeispiel zur adressenfreien Fehlerortung mittels Schleifenschluß in einem Nachrichtenübertragungssystem für digitale Signale verwendet. Die Übertragung der digitalen Signale erfolgt dabei über Lichtwellenleiter, es ist also zusätzlich eine Umformung der elektrischen in optische Signale mittels einer Laserdiode als optischen Sender und eine Rückumwandlung mit einer Photodiode erforderlich. Von der Photodiode wird das empfangene Signal an einen Verstärker abgegeben, an den sich der Eingang des eigentlichen Zwischenregenerators für diese Übertragungsrichtung anschließt. Zusätzlich enthält der Zwischenregenerator einen Ortungsempfänger, der zur Aufnahme des Fehlerortungssignals und zur Erkennung des Schleifenschlußsignals dient.

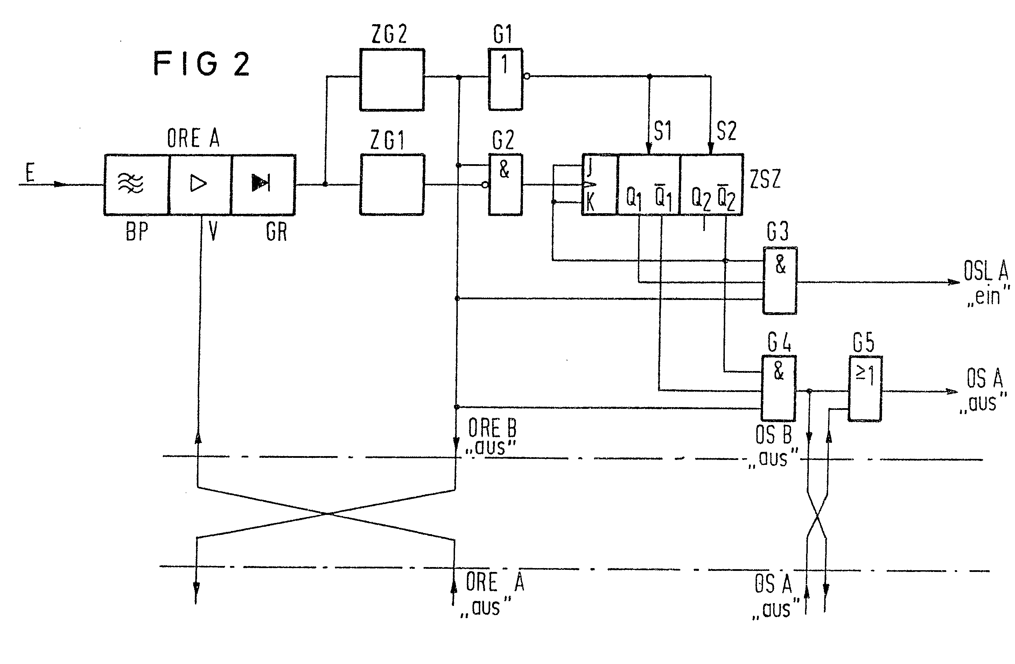

In der Fig. 2 ist der Prinzipstromlauf eines derartigen Ortungsempfängers dargestellt, der mit seinem Eingang E an den Ausgang des Photodiodenverstärkers angeschaltet ist. Der Ortungsempfänger OREA für die Übertragungsrichtung A enthält einen auf die Frequenz von 1,432 MHz abgestimmten Bandpaß mit nachgeschaltetem, durch ein Steuersignal von der Gegenrichtung abschaltbaren Verstärker V und einem an den Verstärkerausgang angeschlossenen Gleichrichter GR. Damit wirkt dieser Teil des Ortungsempfängers als Resonanzverstärker, der bei Empfang des Schleifenschlußsignals mit der genannten Frequenz an seinem Ausgang einen positiven logischen Pegel abgibt, der eine logische Eins darstellt. Mit diesem Ausgang sind die Eingänge eines ersten und eines zweiten Zeitgliedes ZG1, ZG2 verbunden, die als RC-Glieder aufgebaut sind. Mit dem Ausgang des zweiten Zeitgliedes ZG2 ist dabei der Eingang eines als Inverter geschalteten ersten Gatters G1, der eine Eingang eines als UND-Glied geschalteten zweiten Gatters G2, der erste Eingang eines dritten und eines vierten, jeweils als UND-Glied geschalteten Gatters G3, G4 und der Schalteingang des Ortungsempfängers OREB für die Gegenrichtung verbunden. Durch diese Verbindung zum Ortungsempfänger für die Gegenrichtung wird dieser ausgeschaltet, sobald der Ortungsempfänger für die A-Richtung angesprochen hat. Dadurch wird verhindert, daß ein doppelter Schleifenschluß geschaltet wird. Somit können für beide Übertragungsrichtungen A, B gleiche Fehlerortungssignale und damit auch gleiche Ortungsempfänger und gleiche Ortungseinrichtungen in der Endstelle verwendet werden.

Mit dem Ausgang des Inverters G1 sind die Setzeingänge S1, S2 der beiden Stufen eines mittels JK-Flipflops aufgebauten Zustandszählers ZSZ verbunden. Der Ausgang des ersten Zeitgliedes ZG1 ist mit dem invertierenden Eingang des AND-Gliedes G2 verbunden, dessen Ausgang mit dem Takteingang des Zustandszählers verbunden ist. Der Ausgang Q1 der ersten Stufe des Zustandszählers ist mit dem zweiten Eingang des dritten Gatters G3 verbunden, während der inverse Ausgang $\overline{Q1}$ mit dem zweiten Eingang des vierten Gatters G4 verbunden ist. Außerdem ist der inverse Ausgang $\overline{Q2}$ des Zustandszählers mit dem J- und dem K-Eingang des Zustandszählers und mit den dritten Eingängen des dritten und des vierten Gatters G3 und G4 verbunden. Vom Ausgang des dritten Gatters G3 wird ein Steuersignal OSLA abgegeben, bei dessen Auftreten der Schleifenschluß erfolgt. Vom Ausgang des vierten Gatters wird ein Steuersignal OSB an den Eingang eines fünften Gatters G5, das als ODER-Glied geschaltet ist und an eine Steuervorrichtung abgegeben, durch die der optische Sender für die Gegenrichtung abgeschaltet wird. Ein entsprechendes Signal OSA wird vom Gatter G4 des Ortungsempfängers OREB für die Gegenrichtung empfangen und dem zweiten Eingang des fünften Gatters zugeführt, der an seinem Ausgang ein Steuersignal OSA abgibt, durch das der optische Sender für diese Übertragungsrichtung ausgeschaltet wird.

Zur Erläuterung der Wirkungsweise des Ortungsempfängers nach der Fig. 2 sei zunächst angenommen, daß der normale Betriebszustand vorliegt. Im normalen Betriebszustand wird kein Fehlerortungssignal gesendet, das zweite Zeitglied ZG2 ist damit entladen und der Zustandszähler ZSZ in Stellung 0 gesetzt. Mit dem Beginn der Fehlerortung wird das Fehlerortungssignal ausgesendet. Das Erkennen des im Fehlerortungssignal ausgesendet. Das Erkennen des im Fehlerortungssignal enthaltenen Schleifenschlußsignals und die Freigabe des Zustandszählers für den Empfang von Schaltimpulsen erfolgt erst, nachdem das Fehlerortungssignal mit dem Schleifenschlußsignal ununterbrochen für die Erkennungszeit T5 von ca. 400 ms anliegt. Ununterbrochen bedeutet dabei, daß etwaige Unterbrechungen nicht länger als die erste Haltezeit T3 von 10 ms andauern. Das Verhältnis zwischen der Erkennungszeit T5 und der ersten Haltezeit T3 sollte möglichst groß gewählt werden, um die Wahrscheinlichkeit einer zufälligen Vortäuschung des Schleifenschlußsignals klein zu halten. Dabei ist jedoch zu beachten, daß die erste Haltezeit T3 größer als die Dauer T1 von 3,8 ms des Prüfsignals zu wählen ist, damit das Einblenden des Prüfsignals nicht als Unterbrechung des Schleifenschlußsignals gewertet wird.

Nach einem ungestörten Empfang des Schleifenschlußsignals über die Erkennungszeit T5 hinaus befindet sich der Ortungsempfänger in einer Vorbereitungsstellung für den Schleifenschluß. Dadurch wird im zweiten Zeitglied intern die Zeitkonstante umgeschaltet und statt der ersten Haltezeit T3 nunmehr die vergleichsweise längere zweite Haltezeit T6 von etwa 400 ms wirksam, außerdem wird durch das vom zweiten Zeitglied ZG2 abgegebene Signal die Signalübertragung von der Zwischenstelle in beide Übertragungsrichtungen durch Abschalten der optischen Sender unterbrochen und das zweite Gatter G2 freigegeben, so daß auftretende Schaltimpulse zum Eingang des Zustandszählers ZSZ gelangen können. Aufgrund der Zeitkonstante des ersten Zeitgliedes ZG1 werden dabei als Schaltimpulse nur Unterbrechungen der Ortungssignals gewertet, die länger als eine minimale Dauer T4 von 40 ms und kürzer als eine maximale Dauer von 400 ms sind. Während der Unterbrechung des Schleifenschlußsignals wird zur Sicherung der Taktsynchronisation das Prüfsignal gesendet.

Während der Erkennungszeit sind die optischen Sender in Betrieb, so daß zunächst auch die Ortungsempfänger der weiteren Zwischenstellen ansprechen, ihre Endstufen abschalten, das zweite Zeitglied umschalten und das zweite Gatter aktivieren. Nachdem aber die zweite Haltezeit T6 von 400 ms überschritten ist, gehen die Ortungsempfänger in diesen Zwischenstellen wieder in ihren Ausgangszustand zurück, da aufgrund der ausgeschalteten Endstufe in der ersten Zwischenstelle das Schleifenschlußsignal ausbleibt.

Erst danach kann für eine Schaltimpulsdauer T4 von etwa 50 ms von der ortenden Endstelle das Aussenden des Schleifenschlußsignals unterbrochen werden. Diese Unterbrechung wird vom Zeitglied ZG1 erkannt und ein entsprechendes Ausgangssignal über das Gatter G2 zum Eingang des Zustandszählers ZSZ abgegeben, der dadurch in die Zählerstellung 1, die Schleifenschlußstellung geschaltet wird. Dadurch werden die optischen Endstufen in der Zwischenstelle für beide Übertragungsrichtungen wieder eingeschaltet und übertragen das Fehlerortungssignal einerseits zu den nächsten Zwischenstellen und andererseits über den Schleifenschluß zurück zum Empfänger des Ortungsgerätes. Damit kann die Fehlermessung über diese Zwischenstelle beginnen, außerdem schalten die folgenden Regeneratoren nach der Erkennungszeit von T5 = 400 ms in die Vorbereitungsstellung. Dadurch wird in den Zwischenstellen jeweils der optische Sender abgeschaltet, so daß bis auf die unmittelbar folgende Zwischenstelle alle anderen Zwischenstellen wieder abfallen. Die unmittelbar folgende Zwischenstelle empfängt weiterhin über den optischen Sender der ersten Zwischenstelle das Schleifenschlußsignal und bleibt in der Vorbereitungsstellung. Zur Erläuterung dieses Mechanismus sei auf die Tabelle 1 verwiesen.

Tabelle 1 : Betriebszustände der Zwischenregeneratoren

| Betriebszustand Ortungs-empfänger A | Ortungssignal in Richtung A « erkannt » | Zustandszähler in Stellung « » | Ortungsempfänger | | Optischer Sender | | Schleifenschluß | |
|---|---|---|---|---|---|---|---|---|
| | | | A | B | A | B | A | B |
| — | nein | « 0 » | ein | ein | ein | ein | aus | aus |
| V | ja | « 0 » | ein | aus | aus | aus | aus | aus |
| S | ja | « 1 » | ein | aus | ein | ein | ein | aus |
| BS | ja | « 2 » | ein | aus | ein | ein | aus | aus |

— Normalzustand
V Vorbereitet sür Schleifenschluß
S Schleifenschluß
BS Blockiert für Schleifenschluß
Bei Fehlerortung in Richtung B sind A und B in der Tabelle zu vertauschen.

Die Schleifenschlußstellung in der ersten Zwischenstelle und die Vorbereitungsstellung in der zweiten Zwischenstelle wird beibehalten, bis die Meßzeit durch eine zweite Unterbrechung für die Schaltimpulsdauer beendet wird. Um in der Anfangsphase der Messungen jeweils Störungen zu verhindern, wird beim Ausführungsbeispiel nach dem Schleifenschluß noch für ca. 0,7 s die Messung ausgesetzt. Mit dem Erkennen des zweiten Schaltimpulses durch das erste Schaltglied ZG1 gibt dieses über das zweite Gatter G2 einen weiteren Schaltimpuls an den ersten Zustandszähler ZSZ ab. Durch diesen Schaltimpuls wird der Zustandszähler ZSZ in die Zählerstellung 2 gebracht und in dieser Stellung gesperrt. Dadurch wird der Schleifenschluß in dieser Zwischenstelle aufgehoben und der Zustandszähler und damit der Ortungsempfänger in dieser Zwischenstelle für weitere Schleifenschlußsignale blockiert. Außerdem wird aber in der zweiten Zwischenstelle, die sich in der Vorbereitungsstellung befand, der Schleifenschluß erkannt und geschaltet und außerdem die optischen Endstufen für beide Übertragungsrichtungen wieder angeschaltet. Damit geginnt die Meßzeit für die zweite Zwischenstelle und die Erkennungszeit für die weiteren Zwischenstellen. Nach der Erkennungszeit bleibt die dritte Zwischenstelle in der Vorbereitungsstellung, während alle weiteren Zwischenstellen wieder abfallen.

Eine weitere Unterbrechung des Schleifenschlußsignals in der ortenden Endstelle für die Schaltimpulsdauer von etwa 50 ms bewirkt das Weiterschalten des Schleifenschlusses von der zweiten zur dritten Zwischenstelle, in entsprechender Weise wirkt jede weitere derartige Unterbrechung als Schaltsignal für das Weiterschalten des Schleifenschlusses zur nächsten Zwischenstelle. Das Weiterschalten des Schleifenschlusses auf der Strecke wird durch die Tabelle 2 in übersichtlicher Form dargestellt. Durch den n-ten Taktimpuls wird also die n − 1. Zwischenstelle blockiert (BS), der Schleifenschluß in der n-ten Zwischenstelle geschaltet (S) und die n + 1. Zwischenstelle in die Vorbereitungs-stellung V gebracht.

Tabelle 2

| Schleifenschlußsignal | Zwischenstelle | | | | | | | | |
|---|---|---|---|---|---|---|---|---|---|
| | 1 | 2 | 3 | 4 | — — — | N − 1 | N | N + 1 | N + 2 |
| aus | — | — | — | — | | — | — | — | — |
| ein | V | — | — | — | | — | — | — | — |
| 1. Taktimpuls | S | V | — | — | | | | | |
| 2. Taktimpuls | BS | S | V | — | | | | | |
| 3. Taktimpuls | BS | BS | S | V | | | | | |
| (N − 1). Taktimpuls | BS | BS | BS | BS | | S | V | — | — |
| N. Taktimpuls | BS | BS | BS | BS | | BS | S | V | — |
| (N + 1). Taktimpuls | BS | BS | BS | BS | | BS | BS | S | V |
| (N + 2). Taktimpuls | BS | BS | BS | BS | | BS | BS | BS | S |

## Ansprüche

1. Verfahren zur adressenfreien Fehlerortung mittels Schleifenschluß für eine Nachrichtenübertragungsstrecke von einer ortenden Endstelle aus über wenigstens eine die Übertragungssignale beider Übertragungsrichtungen regenerierende und/oder verstärkende Zwischenstelle, die einen Schleifenschlußschalter zur Verbindung des Ausgangs der Zwischenstelle für die eine Übertragungsrichtung mit deren Eingang für die andere Übertragungsrichtung enthält und von der ortenden Endstelle ein Fehlerortungssignal ausgesendet wird, das periodisch abwechselnd Abschnitte vorgewählter Dauer (T1, T2) mit einem Prüfsignal (PS) und solche mit einem über den gesamten Ortungsvorgang gleichbleibenden Schleifenschlußsignal (SSS) enthält, daß als Schleifenschlußsignal ein im normalen Betrieb mit ausreichend geringer Wahrscheinlichkeit auftretendes Signal vorgesehen ist, daß nach Ablauf der für die Ortungsmessungen erforderlichen Zeit die Aussendung des Schleifenschlußsignals (SSS) unterbrochen und dadurch der in der ersten Zwischenstelle geschaltete Schleifenschluß aufgehoben und der Schleifenschlußempfänger in der ersten Zwischenstelle für die weitere Ortungszeit blockiert wird und außerdem die unmittelbar folgende Zwischenstelle in die Schleifenschlußstellung gebracht wird, und daß zum weiteren Fortschalten des Schleifenschlusses die Aussendung des Schleifenschlußsignals (SSS) erneut unterbrochen wird, dadurch gekennzeichnet, daß die Vorbereitungsstellung der einzelnen Zwischenstellen ohne Aussendung eines gesonderten Vorbereitungssignals durch das Schleifenschlußsignal (SSS) mit gesteuert wird und dazu während des gesamten Fehlerortungsvorganges von der ortenden Endstelle ein einziges Fehlerortungssignal (PS, SSS) ausgesendet wird, daß eine erste Haltezeit (T3) vorgesehen ist und Störungen, deren Dauer diese erste Haltezeit nicht überschreitet, die Erkennung des Schleifenschlußsignals (SSS) in der Zwischenstelle nicht beeinträchtigen, daß die Dauer (T1) der Prüfzeitabschnitte kleiner als die erste Haltezeit gewählt ist, daß nach ungestörtem Empfang des Schleifenschlußsignals (SSS) über eine vorgegebene Erkennungszeit (T5) in der Zwischenstelle diese in eine Vorbereitungsstellung (V) umgeschaltet wird und dazu wenigstens nahezu gleichzeitig die Signalübertragung von der Zwischenstelle in beide Übertragungsrichtungen unterbrochen wird, von der ersten Haltezeit (T3) auf eine vergleichsweise längere zweite Haltezeit (T6) umgeschaltet wird und die Empfangs- und Steuereinrichtung für das Schleifenschlußsignal (SSS) in eine Vorbereitungsstellung gebracht wird, daß anschließend in der ortenden Endstelle nach einer die zweite Haltezeit (T6) überschreitenden, beliebig verlängerbaren Zeit die Aussendung des Schleifenschlußsignals (SSS) für eine Schaltimpulsdauer (T4), die länger als die erste Haltezeit (T3) und kürzer als die zweite Haltezeit (T6) und als die Erkennungszeit (T5) ist, unterbrochen wird und dadurch in der vorbereiteten Zwischenstelle der Schleifenschluß geschaltet und die Signalübertragung in beide Übertragungsrichtungen wieder eingeschaltet wird und somit die nachgeschalteten Zwischenstellen zunächst das den Schleifenschlußbefehl enthaltende Fehlerortungssignal wieder empfangen und die unmittelbar folgende Zwischenstelle nach der Erkennungszeit (T5) in die Vorbereitungsstellung gebracht wird und daß danach zur Weiterschaltung des Schleifenschlusses in der ortenden Endstelle nach einer die Summe aus Erkennungszeit (T5) und zweiter Haltezeit (T6) überschreitenden, für die Ortungsmessung beliebig verlängerbaren Zeit, die Aussendung des Schleifenschlußsignals erneut für eine Schaltimpulsdauer (T4) unterbrochen wird.

2. Verfahren nach Anspruch 1, dadurch gekennzeichnet, daß während der Unterbrechung (T4) der Aussendung des Schleifenschlußsignals (SSS) das Prüfsignal (PS) ausgesendet wird.

3. Verfahren nach Anspruch 1, dadurch gekennzeichnet, daß die Dauer der zweiten Haltezeit (T6) gleich der der Erkennungszeit (T5) ist.

4. Verfahren nach einem der vorhergehenden Ansprüche, dadurch gekennzeichnet, daß die Dauer (T1, T2) der Abschnitte des Prüfsignals (PS) und des Schleifenschlußsignals (SSS) zu jeweils 3,8 ms, die erste Haltezeit (T3) zu 10 ms, die Schaltimpulsdauer (T4) zu 50 ms, und die Erkennungszeit (T5) und die zweite Haltezeit (T6) zu jeweils 400 ms gewählt sind.

5. Verfahren nach Anspruch 1, dadurch gekennzeichnet, daß als Schleifensignal (SSS) eine Rechteckfolge festgelegter Frequenz gewählt ist.

6. Verfahren nach Anspruch 1, dadurch gekennzeichnet, daß als Schleifenschlußsignal (SSS) ein im normalen Betrieb nicht verwendetes Codewort ausgesendet wird.

7. Verfahren nach Ansprüchen 1 oder 2, dadurch gekennzeichnet, daß als Schleifenschlußsignal (SSS) eine zusätzliche Modulation des Prüfsignals (PS) erfolgt.

8. Verfahren nach einem der vorhergehenden Ansprüche, dadurch gekennzeichnet, daß als Schleifenschlußsignal (SSS) ein Teil einer Pseudozufallsfolge mit einer charakteristischen Wiederholfrequenz ausgesendet wird.

9. Verfahren nach Ansprüchen 1, 2 oder 6, dadurch gekennzeichnet, daß als Schleifenschlußsignal (SSS) ein Teil einer Pseudozufallsfolge mit einer charakteristischen Wiederholfrequenz ausgesendet wird.

## Claims

1. Process for address-free fault location by means of loop closure for a communications transmission link from a locating end station via at least one intermediate station which regenerates and/or amplifies the transmission signals of both directions of transmission and which contains a loop closure switch which serves to connect the output of the intermediate station for the first direction of transmission to its input for the other direction of transmission and a fault locating signal is transmitted from the locating end station which signal contains periodically alternating sections of pre-selected duration (T1, T2) comprising a test signal (PS) and others comprising a loop closure signal (SSS) which remains constant over the entire locating operation, that the loop closure signal comprises a signal which occurs with a sufficiently low degree of probability during normal operation, that on the expiration of the time required for location measurements the transmission of the loop closure signal (SSS) is interrupted and thus the loop closure which has been switched through in the first intermediate station is discontinued and the loop closure receiver in the first intermediate station is blocked for the remainder of the locating time and moreover the directly following intermediate station is brought into the loop closure position, and that for the further advance of the loop closure, transmission of the loop closure signal (SSS) is again interrupted, characterised in that the preparation of the individual intermediate station is controlled by the loop closure signal (SSS) without the need to transmit a special preparation signal and that for this purpose during the whole of the fault locating operation the locating end station emits one single fault locating signal (PS, SSS), that a first holding time (T3) is provided and disturbances whose duration does not exceed this first holding time do not impair the recognition of the loop closure signal (SSS) in the intermediate station, that he duration (T1) of the test time sections is selected to be shorter than the first holding time, that following the undisturbed reception of the loop closure signal (SSS) for a given recognition time (T5) in the intermediate station the latter is switched into the preparation position (V) and for this purpose at least approximately simultaneously the signal transmission from the intermediate station in both directions of transmission is interrupted, a switch-over is made from the first holding time (T3) to a comparatively longer second holding time (T6) and the receiving and control device for the loop closure signal (SSS) is brought into a preparation position, that subsequently in the locating end station following a period of time which exceeds the second holding time (T6) and which can be extended in arbitrary fashion the transmission of the loop closure signal (SSS) is interrupted for a switching pulse duration (T4) which is longer than the first holding time (T3) and shorter than the second holding time (T6) and than the recognition time (T5), and that thus, in the prepared intermediate station, the loop closure is switched into effect and the signal transmission in both directions of transmission is reestablished and thus the following intermediate stations for the time being again receive the fault locating signal which contains the loop closure command and the directly following intermediate station is brought into the preparation position following the recognition time (T5), and that then, is order that the loop closure may be stepped on in the locating end station following a period of time which exceeds the sum of the recognition time (T5) and the second holding time (T6) and which can be extended in arbitrary fashion for the location measurement, the transmission of the loop closure signal is again interrupted for a switching pulse duration (T4).

2. Process as claimed in claim 1, characterised in that during the interruption (T4) of the transmission of the loop closure signal (SSS) the test signal (PS) is transmitted.

3. Process as claimed in claim 1, characterised in that the duration of the second holding time (T6) is equal to that of the recognition time (T5).

4. Process as claimed in one of the preceding claims, characterised in that the duration (T1, T2) of the sections of the test signal (PS) and of the loop closure signal (SSS) are each selected to amount to 3.8 ms, the first holding time (T3) to 10 ms, the switching pulse duration (T4) to 50 ms, and the recognition time (T5) and second holding time (T6) are each selected to amount to 400 ms.

5. Process as claimed in claim 1, characterised in that a rectangular sequence of predetermined frequency is selected as loop signal (SSS).

6. Process as claimed in claim 1, characterised in that a code word which is not used in normal operation is transmitted as loop closure signal (SSS).

7. Process as claimed in claims 1 or 2, characterised in that an additional modulation of the test signal (PS) serves as loop closure signal (SSS).

8. Process as claimed in one of the preceding claims, characterised in that a part of a pseudo-random sequence which has a characteristic repetition frequency is transmitted as loop closure signal (SSS).

9. Process as claimed in claims 1, 2 or 6, characterised in that a part of a pseudo-random sequence which has a characteristic repetition frequency is transmitted as loop closure signal (SSS).

**Revendications**

1. Procédé de localisation sans adresse de défaut au moyen de la fermeture de boucle, pour une ligne de transmission d'informations à partir d'une station terminale de détection, par l'intermédiaire d'au moins une station-relais régénérant et/ou amplifiant les signaux de transmission des deux sens de transmission, qui comporte un commutateur de fermeture de boucle pour relier la sortie de la station-relais pour un des sens de transmission à son entrée pour l'autre sens de transmission et la station terminale de détection émettant un signal de localisation de défaut qui comporte des sections alternant périodiquement de durée présélectionnée (T1, T2) avec un signal de contrôle (PS) et des sections avec un signal de fermeture de boucle (SSS) restant identique durant tout le processus de localisation, qu'en tant que signal de fermeture de boucle est prévu un signal qui, en service normal, apparaît avec une probabilité suffisamment faible, qu'après écoulement du temps nécessaire aux mesures de localisation l'émission du signal de fermeture de boucle est interrompue et que de ce fait la fermeture de boucle effectuée dans la première station-relais est supprimée et le récepteur de fermeture en boucle dans la première station-relais est bloquée pour l'autre durée de localisation et en outre la sation-relais immédiatement suivante est amenée dans la position de fermeture de boucle, et que pour l'avance ultérieure de la fermeture de boucle l'émission du signal de fermeture de boucle (SSS) est de nouveau interrompue, caractérisé par le fait que la position de préparation des stations-relais individuelles est commandée par le signal de fermeture de boucle (SSS) sans émission d'un signal de préparation distinct et à cet effet pendant tout le processus de localisation de défaut un signal de localisation de défaut unique (PS, SSS) est émis par la station terminale de détection, qu'on prévoit un premier temps de maintien (T3) et que des perturbations dont la durée ne dépasse pas ce premier temps de maintien ne nuisent à l'identification du signal de fermeture de boucle (SSS) dans la station-relais, que la durée (T1) des sections de temps de contrôle est choisie plus faible que le premier temps de maintien, qu'après réception sans perturbation du signal de fermeture de boucle (SSS) pendant un temps d'identification (T5) prédéterminé dans la station-relais, celle-ci est commutée dans une position de préparation (V) et à cet effet au moins presque simultanément la transmission de signaux à partir de la station-relais est interrompue dans les deux sens de transmission, on passe du premier temps de maintien (T3) à un second temps de maintien (T6) relativement plus long et le dispositif récepteur et de commande pour le signal de fermeture de boucle (SSS) est amené dans une position de préparation, qu'ensuite dans la station terminale de réception, après un temps (T6) dépassant le second temps de maintien et pouvant être prolongé de façon arbitraire, l'émission du signal de fermeture de boucle (SSS) est interrompue pour une durée d'impulsion de commutation (T4) qui est plus longue que le premier temps de maintien (T3) et plus courte que le second temps de maintien (T6) et que le temps d'identification (T5) et de ce fait branche la fermeture de boucle dans la station-relais préparée, et la transmission de signaux dans les deux sens de transmission est rétablie et par conséquent les stations-relais situées en aval reçoivent de nouveau le signal de localisation de défaut contenant l'ordre de fermeture de boucle et la station-relais immédiatement suivante est amenée dans la position de préparation après le temps d'identification (T5) et qu'ensuite, pour la progression de la fermeture en boucle, dans la station terminale de détection, après un temps pouvant être prolongé arbitrairement pour la mesure de localisation et supérieur à la somme (T6) du temps d'identification (T5) et du second temps de maintien, l'émission du signal de fermeture de boucle est interrompue de nouveau pour une durée d'impulsion de commutation (T4).

2. Procédé selon la revendication 1, caractérisé par le fait que pendant l'interruption (T4) de l'émission du signal de fermeture de boucle (SSS) le signal de contrôle (PS) est émis.

3. Procédé selon la revendication 1, caractérisé par le fait que la durée du second temps de maintien (T6) est égale à la durée d'identification (T5).

4. Procédé selon l'une des revendications antérieures, caractérisé par le fait que la durée (T1, T2) des sections du signal de contrôle (PS) et du signal de fermeture de boucle (SSS) sont respectivement choisies à 3,8 ms, la première durée de maintien (T3) à 10 ms, la durée d'impulsion de commutation (T4) à 50 ms, et le temps d'identification (T5) et le second temps de maintien (T6) respectivement à 400 ms.

5. Procédé selon la revendication 1, caractérisé par le fait que l'on choisit comme signal de boucle (SSS) une séquence rectangulaire de fréquence déterminée.

6. Procédé selon la revendication 1, caractérisé par le fait que l'on émet comme signal de fermeture de boucle (SSS) un mot de code qui n'est pas utilisé en service normal.

7. Procédé selon les revendications 1 ou 2, caractérisé par le fait qu'au titre de signal de fermeture de boucle (SSS) a lieu une modulation supplémentaire du signal de contrôle (PS).

8. Procédé selon l'une des revendications antérieures, caractérisé par le fait que l'on émet comme signal de fermeture de boucle (SSS) une partie d'une séquence pseudo-aléatoire à fréquence de répétition caractéristique.

9. Procédé selon les revendications 1, 2 ou 6, caractérisé par le fait qu'on émet, en tant que signal de fermeture de boucle (SSS) une partie d'un train pseudo-aléatoire avec une fréquence de répétition caractéristique.

:

FIG 1

FIG 2